Europäisches Patentamt

European Patent Office

Office européen des brevets

(19)

(11) Publication number: 0 368 450
A2

(12) **EUROPEAN PATENT APPLICATION**

(21) Application number: 89309153.8

(22) Date of filing: 08.09.89

(51) Int. Cl.5: **G01D 7/00**

(30) Priority: 08.09.88 GB 8821112

(43) Date of publication of application:
16.05.90 Bulletin 90/20

(84) Designated Contracting States:
CH DE FR GB IT LI

(71) Applicant: **JOHN MCGAVIGAN & COMPANY
LIMITED
Woodilee Road
Kirkintilloch Glasgow, G66 3UW
Scotland(GB)**

(72) Inventor: **Breslin, Thomas
19 Burns Road
Kirkintilloch Scotland(GB)**

(74) Representative: **Jones, Andrée Zena et al
CRUIKSHANK & FAIRWEATHER 19 Royal
Exchange Square
Glasgow, G1 3AE Scotland(GB)**

(54) **Data display devices.**

(57) The invention relates to display devices for the display of data for example on a vehicle facia board. Such data may take the form of markings on a scale which should be readily visible to the driver under a wide variation of lighting conditions. The markings are therefore printed onto a substrate or panel (2) in a series of discrete areas of pigmented material (6) on an opaque background (14). The pigment of the material may be phosphorescent or fluorescent, as desired. The indicator (4) which shows, for example, vehicle speed, is also caused to be luminescent preferably in a different colour. In an example of a device according to the invention, the panel is provided with an optically clear varnish overlayer (18).

## DATA DISPLAY DEVICES

The invention relates to data display devices. Particularly, but not exclusively, the invention is concerned with the display of information comprising a static display of reference data and indicating means, arranged so as to be visible under all lighting conditions normally encountered.

In the display of information it is frequently a requirement that the information given is read against a reference data system for example a graduated scale. The markings on the scale should be clearly visible even under low lighting conditions and this requirement presents special difficulties for example where the information is displayed on the instrument panel of a vehicle facia board.

It is therefore an object of the invention to provide a display unit including an array of informative data which is or becomes visible under a wide range of lighting conditions.

It is also desirable to provide nighttime illumination of the scale markings which is even from one end of the scale to the other. Evenness of illumination is difficult to obtain where the light is derived from conventional light bulbs. One solution to this problem is to provide back-lit panels which are opaque with the exception of translucent areas defining the desired symbols. However, careful grading of the degree of translucency of the symbol areas is required to compensate for the varying distances areas are located from the light bulb.

It is therefore a further object of the invention to provide a simplified lighting arrangement for the even illumination of data on a display unit.

The invention therefore provides, in one of its aspects, a data display device comprising a substrate provided with at least one non-transparent region, a plurality of discrete areas of luminescent pigment-containing material deposited upon said non-transparent regions and an optically clear overlay superposed upon at least those portions of said non-transparent region(s) provided with the pigment-containing material, said material being capable of luminescence under ultra-violet light (U.V. light).

Advantageously, the discrete areas of material are applied by a printing process, conveniently a screen printing process. The material may also be incorporated into or applied to a movable indicator or pointer associated with the data display.

Preferably, the optically clear overlay comprises a so-called varnish, for example, a varnish of the kind suitable to be dried by U.V. light.

Advantageously, the pigment-containing material includes an optical brightening agent, capable of enhancing daylight viewing of the data.

The invention also provides in another of its aspects, a data display device as described in the third paragraph of this specification, in association with an ultra-violet light source directed at the surface of the substrate on which the pigment-containing material is applied, said light source serving to cause excitation of the luminescent pigment.

The invention provides, in yet another of its aspects, a data display device as described in either the above paragraph or in the third paragraph of the specification wherein a movable indicator is provided for movement along a graduated scale comprising said areas of material containing luminescent pigment applied to the substrate, said indicator also being provided with luminescent pigment-containing material.

Conveniently, the device may be located in an instrument panel of a vehicle, marine craft or aircraft, or in other similar suitable locations.

If desired, the pigment of the material incorporated in or applied to the indicator is selected to emit light under the effect of U.V. radiation, which is of a colour contrasting with the light emitted by the first mentioned pigment.

While a substrate may be selected for use as a static sign such as an "EXIT" sign in a public building, an example of a device according to the invention that will be described below is one for use in the facia instrument panel of a vehicle such as a car or other automotive vehicle. It will be understood that the invention may be found particularly useful in situations in which the reference data or other information is required to be viewed in daylight, artificial light and also in very low light conditions, in the case of a car, during night driving. In such circumstances an optical brightening agent may be added to the pigment to assist viewing in the absence of U.V. light.

The selected pigment may be phosphorescent, or where the emitted light is required to cease immediately the associated ultra-violet source is switched off, fluorescent. The pigment may conveniently be of white or other light colour when viewed under natural or artificial lighting conditions other than U.V. light, the non-transparent areas of the substrate being black or of another dark colour to give the required contrast. The pigment may be selected for example to emit a blue or green light on exposure to U.V. radiation, such colours being generally considered as restful to the eye. However, any suitable colour may be selected.

There will now be described an example of a device according to the invention. It will be understood that the description which is to be read with reference to the drawings is given by way of example only and not by way of limitation.

In the drawings:

Fig. 1 shows a facia panel incorporating a device according to the invention;

Fig. 2 is a sectional view through a data bearing portion of the device, illustrating two alternative arrangements thereof.

The figures illustrate the facia board of a car, including a panel 2, an indicating pointer 4 and a plurality of groups of symbols 6, 8 which are to be viewed by daylight, by artificial light and by the ultra-violet light of a U.V. light source 10 mounted in an instrument housing above the panel 2 so as to direct long wave U.V. radiation (near U.V. light) onto the groups of symbols. The lamp circuit includes an inverter/transformer device 11. A deflector shade 12 is provided to limit the area illuminated by the U.V. light.

Alternatively, if preferred, the U.V. light may be directed to the desired area by means of an optical cable 13 or so-called light tube or light guide.

The panel 2 is of any suitable material, in the present example being of a clear polycarbonate material.

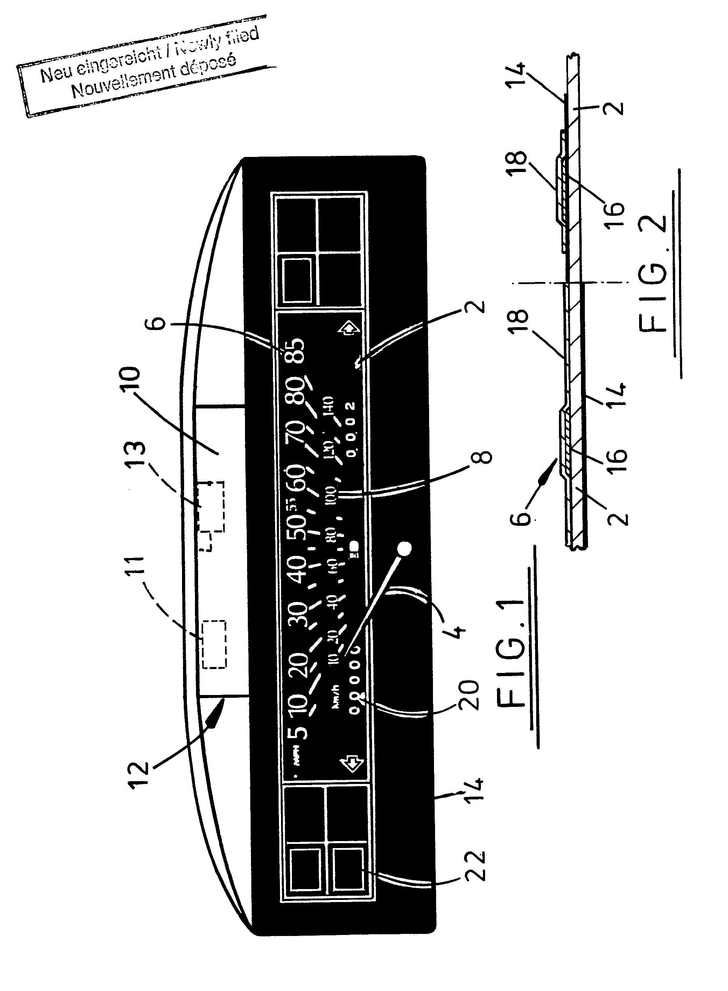

A selected region of the substrate panel 2, i.e. the area to be viewed, is coated with a layer 14 of opaque, black pigmented ink which may be applied either upon the lower surface of the panel as viewed in the left hand portion of Fig. 2 or upon the upper surface as viewed in the right hand side thereof. The symbol 6 which represents part of a static reference scale, i.e. miles per hour, is then applied to the upper surface of the panel or upon the ink layer as appropriate, by a screen printing technique to deposit a sharply defined area of fluorescent pigment-containing ink 16.

The ink area 16 in the present example will appear white when viewed by daylight or the car interior light, but when the U.V. light 10 is illuminated by switching on the facia lights for night-time viewing, the areas 16 will emit a soft but clear green light. The clarity of the emitted light is enhanced by the provision of an overlayer 18 of clear, matt varnish. It will however be understood that this layer may, if preferred, be a sheet overlay of suitable flexibility and thickness. The overlay may cover the entire opaque region or may, as shown in the right hand side of Fig. 2, be confined to the locality of the ink areas 16.

In the present example, the areas of ink 8 are printed, also by screen printing, to give a reference data scale in kilometres per hour. However, for the sake of convenience, the fluorescent pigment of the ink may be selected to emit red light when viewed by ultra-violet light, so as to be easily distinguishable for night driving.

In addition, it will also be found desirable for the pointer 4 either to be formed from a material impregnated with fluorescent pigment or to be provided with a layer of fluorescent pigment-containing material, preferably selected so as to emit light of a third colour, for example, white or pale yellow, to enhance its visibility with respect to the panel 2.

It will be appreciated that, while other parts of the panel, for example the odometer, may be illuminated according to the invention, portions of the panel 2 may, if desired, be apertured (20) to accommodate conventional data-providing devices such as an odometer read-out and a so-called trip-meter.

Translucent areas 22 may also be provided, for example, to receive devices to warn of the use of flashing indicators or full beam headlights. These apertures or translucent areas may of course conveniently be illuminated from the rear of the panel by light sources selected to give a level of brightness compatible with the remainder of the display.

Because the apertures and translucent areas are usually relatively small and compact, illumination from a bulb source is seen as reasonably even in intensity. However, to illuminate an entire series of translucent symbols 6 or 8 by back-lighting would require great care in manufacture if evenness of illumination is to be obtained. Thus, the use of the present invention avoids the difficulties and expense encountered for example, in applying a plurality of layers of pigmentary material to the reverse of the substrate in order to vary the degree of translucency of the areas of the panel which comprise the reference symbols to compensate for the variation in light levels at different distances from the bulbs.

Various modifications may be made within the scope of the invention.

## Claims

1. A data display device comprises a substrate (2) provided with at least one non-transparent region (14), a plurality of discrete areas (6) of luminescent pigment-containing material deposited upon said non-transparent region(s) (14) and an optically clear overlayer (18) superimposed upon at least those portions of said non-transparent region(s) provided with the pigment-containing material, said material being capable of luminescence under ultra-violet light.

2. A device as claimed in claim 1, wherein said pigment-containing material includes an optical brightening agent.

3. A device as claimed in either one of claims 1 and 2, wherein the discrete areas (6) of pigment-containing material are applied by a printing process.

4. A device as claimed in claim 3, wherein the printing process is a screen printing process.

5. A device as claimed in any one of the preceding claims, wherein a movable indicator (4) is provided for movement along a graduated scale comprising said areas of material containing luminescent pigment applied to the substrate, said indicator (4) also being provided with luminescent pigment-containing material.

6. A device as claimed in claim 5, wherein the indicator (4) is coated with a layer of luminescent pigment-containing material.

7. A device as claimed in claim 5, wherein the indicator (4) is formed from a plastics material containing luminescent pigment.

8. A device as claimed in either one of claims 6 and 7, wherein the pigment associated with the indicator (4) is selected to emit light under the effect of ultra-violet light which is of a colour contrasting with the light emitted by the pigment-containing material in said discrete areas (6) of the substrate.

9. A device as claimed in any one of the preceding claims, in association with an ultra-violet light source (10) directed at the surface of the substrate (2) on which the pigment-containing material is applied, said light source serving to cause excitation of the luminescent pigment.

10. A device as claimed in claim 9, wherein the light source is a u.v. lamp (2), a lamp circuit being provided which includes an inverter/transformer device (11).

11. A device as claimed in claim 10, wherein the u.v. light is directed to the desired areas of the substrate by means of an optical cable device (13).

12. A device as claimed in any one of the preceding claims, wherein the luminescent pigment is phosphorescent.

13. A device as claimed in any one of claims 1 to 11, wherein the luminescent pigment is fluorescent.

14. A device as claimed in any one of the preceding claims, wherein the discrete areas (6) of the substrate are formed from a layer of opaque pigmented ink applied to the external surface of the substrate.

15. A device as claimed in any one of claims 1 to 13, wherein the discrete areas (6) of the substrate are formed from a layer of opaque pigmented ink applied to the rear surface of the substrate.

16. A device as claimed in any one of the preceding claims, wherein the optically clear overlayer 918) comprises a varnish.

17. A device as claimed in any one of claims 1 to 15, wherein the optically clear overlayer (18) comprises a flexible sheet overlay.   -

18. A device as claimed in either one of claims 16 and 17, wherein the overlayer (18) is at least substantially confined to the localities provided with luminescent pigment-containing material on the substrate.

19. A device as claimed in any one of the preceding claims, wherein the substrate (2) is apertured (20) to accommodate mechanical data-providing devices.

20. A device as claimed in any one of the preceding claims, wherein the substrate (2) is provided with translucent areas (22) to co-incide in use with the position of illuminated warning devices.

FIG.1

FIG.2

EP 0 368 450 A2